# EUROPÄISCHE PATENTANMELDUNG

(11) **EP 2 977 947 A1**
(43) Veröffentlichungstag der Anmeldung: **27.01.2016**
(21) Anmeldenummer: 14177905.8
(22) Anmeldetag: 21.07.2014
(51) Int. Cl.: G06Q 30/02

(54) **Verfahren zur Identifizierung von Objekten**

(71) Anmelder: Tomas, Zukauskas, 10405 Berlin (DE)
(72) Erfinder: Tomas, Zukauskas, 10405 Berlin (DE)
(74) Vertreter: Müller & Schubert

(57) **Zusammenfassung**

Die vorliegende Erfindung betrifft ein Verfahren zur Übertragung von Daten in Abbildungen (3) dargestellter Objekte, insbesondere von Daten aus Printmedien (1) oder E-Paper (2), über ein System (100), das mindestens eine zentrale Speichereinheit (8), wenigstens einen bidirektionalen Datenübertragungskanal (6), mindestens eine zentrale Datenbank (7) und mindestens ein mobiles Datenverarbeitungsendgerät (5), welches einem Nutzer des Systems zugeordnet ist, umfasst, wobei die Daten zumindest zeitweilig über den mindestens einen bidirektionalen Datenübertragungskanal (6) von der mindestens einen zentralen Datenbank (7) an das mindestens eine mobile Datenverarbeitungsendgerät (5) übertragen werden, dadurch gekennzeichnet, dass man den zu übertragenden Daten in der zentralen Datenbank (7) eine Informationsdatei zuordnet und netzwerkseitig ablegt, die Informationsdatei in Form eines zweidimensionalen Bitmusters (4) auf den Abbildungen (3) der dargestellten Objekte darstellt, wobei der Nutzer des Systems (100) mittels des mobilen Datenverarbeitungsendgeräts (5) das zweidimensionale Bitmuster (4) optoelektronisch erfasst, das mobile Datenverarbeitungsendgerät (5) die so erhaltene Informationsdatei über einen Übertragungskanal (6) an die zentrale Speichereinheit (8) übermittelt und die zentrale Speichereinheit (8) die der Informationsdatei zugeordneten Daten an das Datenverarbeitungsendgerät (5) überträgt.

Vorteilhafterweise kann ein Nutzer mit Hilfe des erfindungsgemäßen Verfahrens Objekte genau identifizieren.

## Beschreibung

Gegenstand der vorliegenden Erfindung ist ein Verfahren zur Übertragung von Daten, insbesondere aus Printmedien oder E-Paper.

In der heutigen Zeit häufen sich die Nachfragen nach Internetplattformen zum Einkaufen. Es existiert bereits eine Vielzahl von Onlineshops im Internet. Konsumenten haben die Möglichkeit online gezielt nach Produkten zu suchen, diese zu erwerben und sich liefern zu lassen.

Jedoch kommt es auch häufig vor, dass ein Konsument sich auf Grund von äußeren Gegebenheiten zu einem spontanen Kauf entscheidet. Konsumenten sehen vielfach Abbildungen von Produkten oder Erscheinungsformen (wie Frisuren) in Printmedien oder E-Paper, die das Interesse zum Kauf, zum Ausprobieren oder zum Nachmachen wecken.

Dennoch fehlen den Konsumenten meist weitere Details für die Umsetzung, wie zum Beispiel der Preis des dargestellten Produktes, Angaben zu den Händlern oder ob es etwaige Produktvarianten gibt.

Die Angabe detaillierter Informationen zu allen dargestellten Objekten in den jeweiligen Printmedien oder E-Paper würde für die einzelnen Verlage eine Steigerung des Papierverbrauchs, einen erheblichen Mehraufwand und zusätzliche Kosten bedeuten.

Mit Hilfe des Internets und der Mobilfunknetze und Mobilfunksysteme, ist eine immer rascher werdende Datenverarbeitung und ein fortlaufender Informationsaustausch möglich. Eine Weiterentwicklung nutzerfreundlicher Kommunikationssysteme und Serviceleistungen findet kontinuierlich statt. Bei einer Variante einer solchen Serviceleistung handelt es sich um eine sogenannte Applikation, kurz: "App".

Hierbei handelt es sich um eine Anwendungssoftware, die über ein Datenübertragungssystem, beispielsweise das Internet, von einer zentralen Datenbank runtergeladen und auf wenigstens einem mobilen Datenverarbeitungsendgerät, beispielsweise einem Smartphone, gespeichert und installiert werden kann.

Die Bandbreite der zur Verfügung stehenden Apps ist sehr hoch. Sie reicht von einfachsten Werkzeugen und Spaßanwendungen mit nur einer Funktion bis hin zu Programmpaketen mit umfangreicher Funktionalität. Dazu gehören einfache Inhalte (wie aktuelle Nachrichten) und Datenbanken, genauso wie reine Benutzerschnittstellen, die die effiziente Anwendung von bestimmten Webanwendungen auf einem mobilen Datenverarbeitungsendgerät ermöglichen.

Insbesondere für Nutzer mobiler Datenverarbeitungsendgeräte wäre es wünschenswert Apps zur Verfügung zu haben, mit deren Hilfe detaillierte Informationen über in Abbildungen dargestellte Objekte aus Printmedien oder E-Paper abrufbar wären, um diese dann käuflich zu erwerben.

Im Stand der Technik ist bereits eine App bekannt, mit der ein Nutzer eines mobilen Datenverarbeitungsendgeräts, die Möglichkeit hat, QR-Codes auf den Seiten eines Katalogs abzulesen. Auf Grund der hinterlegten Dateninformationen in den QR-Codes gelangt der Nutzer direkt auf die dazugehörige Produktseite im Onlineshop des Herstellers (IKEA-Katalog-App). Diese App funktioniert nur in Verbindung mit QR-Codes die einzig für die Produkte dieses speziellen Einrichtungshauses entwickelt und in dessen Produktkatalog abgedruckt werden.

Zusätzlich ist im Stand der Technik eine App bekannt, mit deren Hilfe ein Nutzer eines mobilen Datenübertragungsendgeräts die Möglichkeit hat interessante Produkte zu identifizieren und diese gegebenenfalls zu kaufen. Die Identifizierung der Produkte kann mit Hilfe der App über einen abgedruckten QR-Code, Fotos der Produkte oder Sprachaufzeichnungen erfolgen. Die App prüft anhand der zuvor übertragenen Daten, ob beim Hersteller der App Informationen zu ähnlichen oder identischen Produkten hinterlegt sind. Bei einer Übereinstimmung gelangt der Nutzer direkt auf die Produktseite des Onlineshops des Herstellers der App.

Nachteilig ist jedoch, dass der Konsument nur Informationen zu Produkten abrufen kann, die von dem Hersteller der App vertrieben werden. Des Weiteren ist der Nutzer von Lieferzeiten abhängig und kann die Produkte nicht vor dem Kauf an- oder ausprobieren (App Firefly auf dem Amazone Fire Phone).

Die im Stand der Technik bekannten Lösungen weisen eine Reihe von Nachteilen auf. So ist es beispielsweise bisher nur möglich, dass ein Nutzer bei der Identifizierung eines Produktes direkt auf die Internetseite des Herstellers der App gelangt. Demnach hat der Nutzer keine Möglichkeit, zwischen unterschiedlichen Händlern, Anbietern oder Vertriebspartnern zu wählen.

Bezüglich eines reinen Onlineshops ist es zwar vorteilhaft, dass es eine gewisse Vielfalt an Produkten gibt, jedoch nachteilig, dass der Nutzer sich die Produkte nicht selber anschauen, gegebenenfalls an- oder ausprobieren kann. Außerdem erhält der Nutzer einzig zu den Produkten Informationen, die im Onlineshop selbst angeboten werden und keine Informationen über Produkte, die von diesem Onlineshop eventuell nicht geführt werden. Einzig der Hersteller der App hinterlegt die Informationsdaten zu den Produkten und daher findet eine subjektive Auswahl an Informationen statt. Demnach hat der Nutzer keine Möglichkeit ein abgedrucktes Objekt generell zu identifizieren. Zusätzlich ist der Nutzer gezwungen, die Produkte einzig über das Internet bei einem einzelnen Händler zu erwerben. Des Weiteren könnte es für den Nutzer wünschenswert sein, dass käuflich erstandene Produkt direkt mitzunehmen oder zu verwenden und nicht von Lieferzeiten des Onlineshops abhängig zu sein. Demnach wäre es für einen Nutzer wünschenswert, die Möglichkeit zu haben, zwischen einer Vielzahl von Onlineshops und Ladengeschäften wählen zu können.

Aufgabe der vorliegenden Erfindung ist es daher, die Nachteile des Standes der Technik zu überwinden.

Die Aufgabe der Erfindung ist es, ein Verfahren zur Übertragung von Daten aus Printmedien oder E-Paper bereitzustellen. Mittels des Verfahrens soll es einem Nutzer eines mobilen Datenübertragungsendgeräts möglich sein, die in den Abbildungen dargestellten Objekte in Printmedien oder E-Paper genau zu identifizieren. Dies führt dazu, dass der Nutzer die Objekte bei einem Händler oder Vertrieb seiner Wahl auswählen kann und gegebenenfalls diese direkt ansehen, an- oder ausprobieren kann. Außerdem können mögliche Lieferzeiten und/oder Lieferkosten entfallen.

Eine weitere Aufgabe der vorliegenden Erfindung ist es, ein Verfahren bereitzustellen, bei dem die Informationen zu einzelnen Objekten nicht nur von einem einzelnen Hersteller hinterlegt werden. Vielmehr ist es wünschenswert, dass eine Vielzahl von Hersteller, Herausgeber oder Verlage der Printmedien oder E-Paper die Informationen hinterlegen können. Dies wirkt sich positiv in einen insgesamt reduzierten Mehraufwand und in reduzierten Herstellungskosten einzelner Verlage aus. Außerdem hat der Nutzer somit eine größere Bandbreite an Informationen aus denen er wählen kann.

Eine weitere Aufgabe der vorliegenden Erfindung ist es, ein Verfahren bereitzustellen, mittels welchem die übertragenen Daten mit den GPS-Ortungsdaten des Nutzers eines mobilen Datenübertragungsendgeräts abgeglichen werden können. Dies ist vorteilhaft, da der Nutzer die Gelegenheit hat, die Entfernung zum nächstliegenden Händler, die Öffnungszeiten und gegebenenfalls den Bestand an Waren eines möglicherweise naheliegenden Händlers zu erhalten.

Die Aufgabe der Erfindung wird durch die Bereitstellung eines Verfahrens zur Übertragung von Daten gelöst, welches die Merkmale des Hauptanspruchs aufweist. Vorteilhafte Weiterbildungen des erfindungsgemäßen Verfahrens sind in den abhängigen Unteransprüchen dargestellt.

Gegenstand der Erfindung ist ein Verfahren zur Übertragung von Daten in Abbildungen dargestellter Objekte, insbesondere von Daten aus Printmedien oder E-Paper, über ein System, das mindestens eine zentrale Speichereinheit, wenigstens einen bidirektionalen Datenübertragungskanal, mindestens eine zentrale Datenbank und mindestens ein mobiles Datenverarbeitungsendgerät, welches einem Nutzer des Systems zugeordnet ist, umfasst, wobei die Daten zumindest zeitweilig über den mindestens einen bidirektionalen Datenübertragungskanal von der mindestens einen zentralen Datenbank an das mindestens eine mobile Datenverarbeitungsendgerät übertragen werden, wobei man den zu übertragenden Daten in der zentralen Datenbank eine Informationsdatei zuordnet und netzwerkseitig ablegt, die Informationsdatei in Form eines zweidimensionalen Bitmusters auf den Abbildungen der dargestellten Objekte darstellt, wobei der Nutzer des Systems mittels des mobilen Datenverarbeitungsendgeräts das zweidimensionale Bitmuster optoelektronisch erfasst, das mobile Datenverarbeitungsendgerät die so erhaltene Informationsdatei über einen Übertragungskanal an die zentrale Speichereinheit übermittelt und die zentrale Speichereinheit die der Informationsdatei zugeordneten Daten an das Datenverarbeitungsendgerät überträgt.

Bevorzugt ist dabei, dass man die in der mindestens einen zentralen Datenbank hinterlegten Informationsdateien zur eindeutigen Identifizierung der in den Abbildungen dargestellten Objekte verwendet.

Bevorzugt ist ferner ein erfindungsgemäßes Verfahren, wobei das zweidimensionale Bitmuster ein 2D-Code ist, wobei dieser Barcodes, QR-Codes, Strichcodes oder Balkencodes umfasst.

Besonders bevorzugt ist ein erfindungsgemäßes Verfahren, wobei man das mindestens eine mobile Datenverarbeitungsendgerät, nach Aktivierung durch den Nutzer, zur automatischen Ablesung zweidimensionaler Bitmuster aus Printmedien oder E-Paper verwendet.

Außerdem ist ein erfindungsgemäßes Verfahren bevorzugt, bei dem man die der Informationsdatei zugeordneten Daten zumindest teilweise über den mindestens einen bidirektionalen Datenübertragungskanal verschlüsselt auf das mindestens eine mobile Datenverarbeitungsendgerät überträgt.

Des Weiteren ist ein erfindungsgemäßes Verfahren bevorzugt, bei dem man die zumindest teilweise verschlüsselten Daten nach Übertragung auf das mobile Datenverarbeitungsendgerät zumindest teilweise auf dem mindestens einen mobilen Datenverarbeitungsendgerät entschlüsselt.

Bevorzugt ist ein erfindungsgemäßes Verfahren, wobei man gegebenenfalls mit Hilfe einer unabhängigen Ausgabevorrichtung die übermittelten Daten als Text erzeugt und auf dem mobilen Datenverarbeitungsendgerät darstellt. Besonders bevorzugt ist ein erfindungsgemäßes Verfahren, wobei man dem Nutzer eines mobilen Datenverarbeitungsendgeräts Angaben über die Position des mobilen Datenverarbeitungsendgeräts und/oder den Zeitpunkt der Übertragung von Daten darstellt.

Außerdem ist ein erfindungsgemäßes Verfahren bevorzugt, wobei man die Position eines Nutzers des mindestens einen mobilen Datenverarbeitungsendgeräts mittels GPS ermittelt.

Bevorzugt ist insbesondere ein erfindungsgemäßes Verfahren, bei dem man die ermittelten Positionsdaten und/oder den Zeitpunkt der Übertragung von Daten mit den zu einer Informationsdatei zugeordneten übertragenen Daten vergleicht, verarbeitet und/oder analysiert.

Im Zusammenhang mit der vorliegenden Erfindung können Printmedien ausgewählt sein aus Zeitschriften, Magazinen, Zeitungen, Plakaten, Postern, Flyern, Handzetteln oder elektronisch generierten Abbildungen von abgedruckten Texten.

Des Weiteren können gemäß der vorliegenden Erfindung mobile Datenverarbeitungsendgeräte als Smartphone, Personal Digital Assistant (PDA), Tablet-PC's oder Mini- oder Mikrocomputer ausgebildet sein.

Abbildungen sind im Zusammenhang mit der vorliegenden Erfindung ausgewählt aus Graphiken, Fotos, Texten, Zeichnungen oder bildlichen Darstellungen.

Als 2D-Codes werden optoelektronisch lesbare Schriften bezeichnet, die aus verschieden breiten Strichen oder Punkten und dazwischen liegenden Lücken mit möglichst hohem Kontrast bestehen und als zweidimensionale Bitmuster dargestellt werden. Erfindungsgemäß können 2D-Codes ausgewählt sein aus QR-Codes, Barcodes, Balken- oder Strichcodes.

Die in der vorliegenden Erfindung in Abbildungen dargestellten Objekte können Gegenstände wie Möbel, Kleidung oder Accessoires und dergleichen, das äußere Erscheinungsbild wie Make-up, Frisuren oder Kleidungsstil und dergleichen oder Designvorschläge wie Farbgestaltung, Wanddekoration oder Einrichtungsstile und dergleichen umfassen.

Die vorliegende Erfindung wird mit den beigefügten Zeichnungen näher erläutert. Es zeigt:
Fig. 1 eine schematische Darstellung eines Printmediums mit einem abgedruckten 2D-Code, der zur Identifizierung der in den Abbildungen dargestellten Objekte dient,
Fig. 2 eine schematische Darstellung eines auf einem mobilen Datenverarbeitungsendgerät aufgerufenen E-Papers mit einem abgedruckten 2D-Code, der zur Identifizierung der in den Abbildungen dargestellten Objekte dient, und
Fig. 3 eine schematische Darstellung des erfindungsgemäßen Systems zur Übertragung von Daten aus Printmedien.

In Printmedien oder E-Paper sind häufig Objekte abgebildet, die das Interesse von Konsumenten wecken. Nachteilig ist jedoch, dass meistens keine detaillierten Informationen zu den abgedruckten Objekten vorliegen. Insbesondere in der heutigen Zeit wäre es daher vorteilhaft für Nutzer eines mobilen Datenverarbeitungsendgeräts, über ein Verfahren mittels Anwendungssoftware eine Möglichkeit zu erhalten, gezielt Informationen über die in den Abbildungen dargestellten Objekte abrufen zu können. Diese Informationen würden eine genaue Identifizierung des jeweiligen Objekts gewährleisten.

Erfindungsgemäß können die Informationen aus folgenden Angaben ausgewählt sein wie Informationen von Dienstleistern wie detaillierte Beschreibungen, Angaben zu Künstlern oder Namen von Kunstobjekten (wie Gemälde oder Statuen) und/oder Herstellerinformationen wie Artikelnummer, Preis, Größen- und/oder Farbauswahl, ISBN-Nummer, Typenbezeichnung oder Materialangaben und/oder Geschäfts- oder Vertriebsinformationen, wie Kontaktdaten, Öffnungszeiten oder Bestandsinformationen und/oder Designvorschläge wie Farbmischungen oder Namen von Stilrichtungen.

Die vorliegende Erfindung offenbart ein Verfahren zur Übertragung von Daten aus Printmedien oder E-Paper.

Das erfindungsgemäße Verfahren läuft in einem System ab, das mindestens ein mobiles Datenverarbeitungsendgerät, zum Beispiel ein Smartphone, eines Nutzers des Systems umfasst. Der Nutzer hat die Möglichkeit mit Hilfe einer im Smartphone integrierten optischen Einrichtung (wie eine Kamera) oder eines integrierten Scanners die 2D-Codes (wie z. B. QR-Codes), die auf Seiten von Printmedien abgedruckt sind, zu fotografieren oder zu scannen und auf dem Smartphone zu speichern. Erfindungsgemäß hat der Nutzer eines Smartphones außerdem die Möglichkeit, mit Hilfe einer Software, 2D-Codes aus Seiten eines E-Papers abzulesen und auf dem Smartphone abzuspeichern. 2D-Codes enthalten hinterlegte Informationen, die eine genaue Identifizierung der in den Abbildungen dargestellten Objekte ermöglichen. Die 2D-Codes können erfindungemäß Informationen zur Identifizierung mehrerer in Abbildungen dargestellter Objekte auf einer Seite eines Printmediums oder E-Papers beinhalten. Ein 2D-Code kann erfindungsgemäß aber auch nur eine einzelne Information zu einem, in einer Abbildung dargestellten Objekt enthalten. Demnach kann erfindungsgemäß mindestens ein 2D-Code pro Seite eines Printmediums oder eines E-Papers verwendet und abgedruckt werden.

Erfindungsgemäß werden die Informationen als Informationsdateien durch mindestens eine zentrale Datenbank innerhalb des Systems erzeugt und abgespeichert. Demnach spiegeln die 2D-Codes eine gedruckte Form einer Informationsdatei wider. Die Umwandlung von Informationen in Informationsdateien und die daraus generierten 2D-Codes erfolgt mit Hilfe von Softwareprogammen. Gespeichert werden die Informationsdateien netzwerkseitig innerhalb des erfindungsgemäßen Systems in mindestens einer zentralen Speichereinheit. Die Erzeugung der Informationsdatei erfolgt bevorzugt im Vorfeld bei der Erstellung der Daten und/oder Informationen zu den in den Abbildungen dargestellten Objekten. Die Erzeugung kann dabei vom Datenbankbetreiber oder Bediener der zentralen Speichereinheit direkt erfolgen. Es ist erfindungsgemäße aber auch vorgesehen, dass diese Informationsdateien von den Herstellern der Printmedien (Verlage) erzeugt und zusammen mit den Daten über die in den Abbildungen dargestellten Objekte in der Datenbank abgelegt werden. Hierzu können erfindungsgemäß Softwareprogramme verwendet werden, welche eine Schnittstelle zu der zentralen Speichereinheit und der Datenbank aufweisen.

Die unterschiedlichen Informationen zu den einzelnen Objekten werden in mindestens einer zentralen Datenbank hinterlegt. Dabei findet die Hinterlegung der Informationen nicht ausschließlich durch einen einzelnen Hersteller oder Anbieter, wie es im Stand der Technik nachteilig der Fall ist, statt. Vielmehr ist erfindungsgemäß ein Einspeisen der benötigten Informationen über Softwareprogramme über mindestens einen Datenübertragungskanal durch eine Vielzahl von Herstellern, Vertriebspartnern oder insbesondere von Verlagen, die die Printmedien oder E-Paper herausgeben, möglich. Dabei erhalten beispielsweise die Verlage, nach Einspeisung der Informationen in die mindestens eine zentrale Datenbank, diese Informationen in umgewandelter Form über mindestens einen Übertragungskanal zurück. Die Umwandlung erfolgt in der mindestens einen zentralen Datenbank über die Generierung eines entsprechenden 2D-Codes.

Dementsprechend können in der mindestens einen zentralen Datenbank alle Informationen, die je von beispielsweise einzelnen Verlagen hinterlegt wurden, als Informationsdateien abgespeichert werden. Zusätzlich können erfindungsgemäß die Verlage über eine entsprechende Software auf die bereits in der mindestens einen zentralen Datenbank abgespeicherten Informationsdateien zugreifen und die entsprechenden Informationen abrufen. Dadurch kann eine Vielzahl an Informationen für die Identifizierung einzelner Objekte innerhalb der mindestens einen Datenbank gespeichert und weiter verarbeitet werden.

Demzufolge haben die Verlage die Möglichkeit eine Vielzahl an Informationen, die sie entweder selbst eingespeist haben und/oder die bereits abgespeichert wurden, für mehrere Objekte gebündelt in einen einzigen 2D-Code umwandeln. Außerdem können die Verlage beispielsweise auch zusätzlich bereits gespeicherte Informationen zu ähnlichen Objekten, für die Generierung der 2D-Codes verwenden. Die generierten 2D-Codes können dann in Printmedien oder E-Paper abgedruckt werden.

Daher kann ein Nutzer auf Grund des erfindungsgemäßen Verfahrens detaillierte Informationen zu den unterschiedlichen in den Abbildungen dargestellten Objekten der Printmedien oder E-Paper erhalten. Mit Hilfe des mindestens einen mobilen Datenverarbeitungsendgeräts, kann ein Nutzer mit einer beispielsweise integrierten Kamera einen 2D-Code von einer Seite eines Printmediums fotografieren oder scannen und abspeichern. Erfindungsgemäß verbindet sich das mobile Datenverarbeitungsendgerät über mindestens einen Datenübertragungskanal (wie Bluetooth, WLAN oder Mobilfunknetz) mit mindestens einer zentralen Datenbank. Auf Grund des erfindungsgemäßen Verfahrens können somit die entsprechenden hinterlegten Daten von der zentralen Datenbank abgerufen und ausgelesen werden. Dabei wird der Inhalt des 2D-Codes, also die Informationsdatei, mit den in der Datenbank gespeicherten Informationsdateien verglichen. Die der identischen Informationsdatei in der Datenbank zugeordneten Daten der in der Abbildung dargestellten Objekte werden dann zum Datenverarbeitungsendgerät übertragen. Mit Hilfe einer integrierten Ausgabevorrichtung wird dem Nutzer des mobilen Datenverarbeitungsendgeräts die entsprechende Information über das Objekt seines Interesses als Textdatei auf dem Display angezeigt. Die Darstellung der Information kann auch in anderer Weise etwa in Bildform erfolgen.

Außerdem kann die mindestens eine zentrale Datenbank über bekannte Datenübertragungswege mit Anbietern wie Herstellern, Dienstleistern, Onlineshops, Galerien, Boutiquen oder Flagstores und dergleichen verbunden sein. Daher können die von einem Nutzer des erfindungsgemäßen Verfahrens abgerufenen Informationen, der in den Abbildungen dargestellten Objekte, direkt mit den Angaben der Anbieter verglichen und ergänzt werden. Dementsprechend kann der Nutzer zusätzliche detaillierte Informationen, beispielsweise über den Warenbestand zu den in den Abbildungen dargestellten Objekten des Anbieters erhalten.

Ein weiterer Vorteil des erfindungsgemäßen Verfahrens besteht darin, dass die erhaltenen Informationen innerhalb des mobilen Datenverarbeitungsendgeräts mit den Zeit- und Standortdaten (GPS-Daten) des Nutzers abgeglichen werden können. Die abgeglichenen Daten können dem Nutzer mit Hilfe einer in das mobile Datenverarbeitungsendgerät integrierten Ausgabevorrichtung als Text auf dem Display angezeigt werden. Daher erfährt der Nutzer beispielsweise die Entfernung zu einem Händler, der das gewünschte Objekt führt.

Erfindungsgemäß werden mit Hilfe eines mobilen Datenverarbeitungsendgeräts 2D-Codes aus Printmedien eingelesen. Hierzu hat der Nutzer des Datenverarbeitungsendgeräts zuvor ein Programm (APP) geladen, um die notwendigen Funktionen aufzurufen und durchzuführen. Das mobile Datenverarbeitungsendgerät sendet den eingelesenen 2D-Code über einen Datenübertragungskanal an eine zentrale Speichereinheit. Die zentrale Speichereinheit wiederum greift erfindungsgemäß auf eine integrierte zentrale Datenbank zu. Innerhalb der zentralen Datenbank wird der eingelesene 2D-Code mit abgespeicherten Codes verglichen. Die 2D-Codes verweisen auf Datensätze mit Produktinformationen. Bei einer Übereinstimmung des eingelesenen 2D-Codes mit einem bereits hinterlegten 2D-Code werden die abgespeicherten Datensätze mit den Produktinformationen an das mobile Datenverarbeitungsendgerät übertragen. Auf dem Display des mobilen Datenverarbeitungsendgeräts wird der Datensatz dargestellt. Somit erhält der Nutzer des mobilen Datenverarbeitungsendgeräts erfindungsgemäß Informationen zu den in Printmedien abgedruckten Objekten.

Die nachfolgenden Beispiele erläutern unter Bezugnahme auf die Figuren die Erfindung näher, ohne den Umfang der Erfindung zu beschränken.

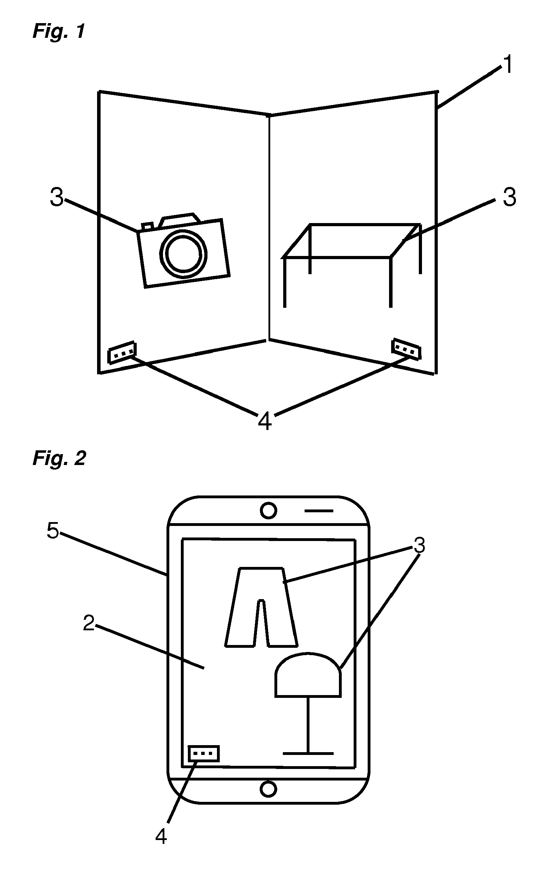

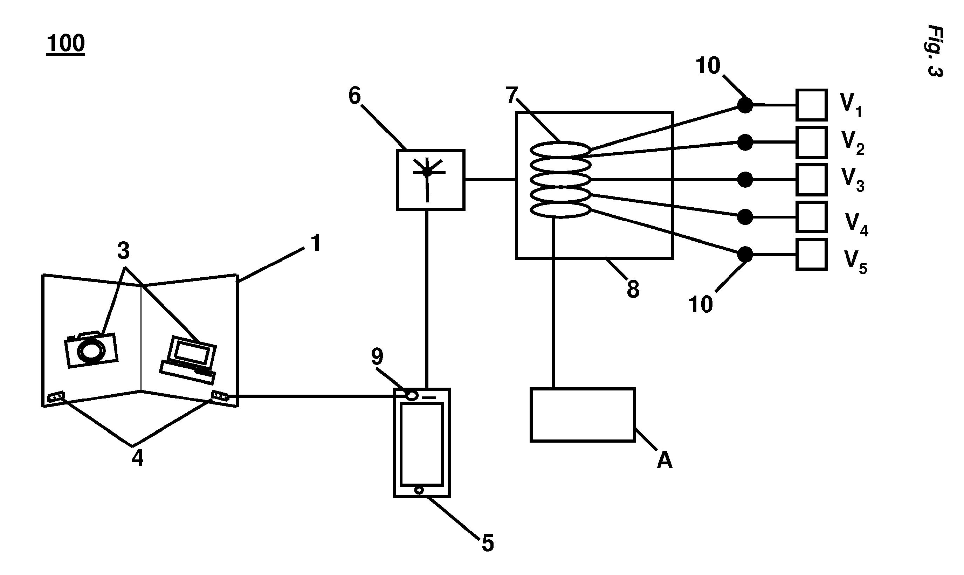

In Figur 1 wird eine schematische Darstellung eines Printmediums 1, beispielsweise als Zeitschrift gezeigt. Auf den Seiten der Zeitung befinden sich in den Abbildungen 3 dargestellte Objekte, die für einen Konsumenten beim Durchblättern der Zeitung interessant sein könnten. Beispielhaft sind eine Kamera und ein Tisch als mögliche Objekte in den Abbildungen 3 dargestellt. Auf jeder Seite des Printmediums, auf der mindestens ein in einer Abbildung 3 dargestelltes Objekt abgedruckt ist, ist ein schematischer 2D-Code 4 abgebildet, der mit Hilfe des erfindungsgemäßen Verfahrens abgelesen werden kann. Die im 2D-Code 4 hinterlegten Informationsdateien werden als Daten abgelesen und über mindestens einen Datenübertragungskanal 6 auf das mobile Datenverarbeitungsendgerät 5 eines Nutzers übertragen und abgespeichert. Die übertragenen Daten enthalten hinterlegte Informationen zu den in den Abbildungen 3 dargestellten Objekten. Auf Grund der Informationen ist eine genaue Identifizierung der jeweiligen Objekte möglich. Es können verschiedene Informationen zu mehreren Objekten für einen einzelnen 2D-Code hinterlegt werden. Demnach ist nur ein einziger 2D-Code pro Seite eines Printmediums erforderlich. Erfindungsgemäß ist aber auch eine Darstellung mehrerer 2D-Codes auf einer Seite denkbar, die verschiedene Informationen zu einzelnen Objekten beinhalten. Diese Informationen können allgemeine Herstellerinformationen, wie Typenbezeichnungen, Preise, alternative Produkttypen und die Farbe umfassen sowie Angaben zu Geschäften, die diese Produkte anbieten. Diese Angaben können die Kontaktdaten, die Öffnungszeiten und den Warenbestand des Produktes bei dem Händler umfassen.

In Figur 2 wird eine schematische Darstellung eines mobilen Datenverarbeitungsendgeräts 5, zum Beispiel eines Smartphones dargestellt, auf dessen Display ein E-Paper 2 aufgerufen wurde. Wie auch in Figur 1, zeigt Figur 2 Objekte, die in Abbildungen 3 dargestellt werden. Auch auf den jeweiligen Seiten des E-Papers werden, wenn Objekte in Abbildungen 3 dargestellt sind, jeweils entsprechende 2D-Codes 4 auf der E-Paper-Seite 2 abgedruckt. Mit Hilfe einer Software, kann ein Nutzer eines mobilen Datenverarbeitungsendgeräts 5 abgebildete 2D-Codes 4 abrufen und abspeichern. Aufgrund dieser abgebildeten 2D-Codes 4 können entsprechend hinterlegte Informationen mit Hilfe des erfindungsgemäßen Verfahrens auf das mobile Datenübertragungsendgerät 5 des Nutzers übertragen werden. Diese Daten können zusätzlich zu den bereits beschriebenen Produktinformationen, außerdem Informationen über die Größenauswahl und Artikelnummern umfassen. Auf Grund der hinterlegten Informationen ist erfindungsgemäß eine eindeutige Identifizierung der dargestellten Objekte möglich.

Das System 100 des erfindungsgemäßen Verfahrens zur Übertragung von Daten, insbesondere aus Printmedien 1 oder E-Paper 2, wird in Figur 3 schematisch dargestellt. Figur 3 zeigt mindestens ein mobiles Datenverarbeitungsendgerät 5. Um das System nutzbar zu machen, lädt der Nutzer eine für das Verfahren optimierte App auf sein Gerät. Mit dieser App können dann alle Funktionen ausgeführt werden, welche für das erfindungsgemäße Verfahren erforderlich sind.

Der Nutzer des mobilen Datenverarbeitungsendgeräts 5, kann mit Hilfe einer integrierten optischen Einrichtung 9 einen abgebildeten 2D-Code 4 von einer Seite eines Printmediums 1 fotografieren. Dieser 2D-Code 4 enthält Informationen in Form von Informationsdateien, über die in den Abbildungen 3 dargestellten Objekte. Für einen 2D-Code 4 können Informationen zu mehreren, auf einer Seite eines Printmediums 1 in Abbildungen 3 dargestellten Objekte hinterlegt sein. Dementsprechend wurde beispielsweise nur ein 2D-Code 4 pro Seite eines Printmediums 1 abgedruckt. Diese Informationsdateien werden innerhalb des erfindungsgemäßen Verfahrens von einer zentralen Datenbank 7 erzeugt und netzwerkseitig in mindestens einer zentralen Speichereinheit 8 abgespeichert. Daher kann das mobile Datenverarbeitungsendgerät 5 beispielsweise über einen über mit Funk (Mobilfunknetz, Wlan, Bluetooth) betriebenen Datenübertragungskanal 6 auf die hinterlegten Informationsdateien zugreifen. Die übertragenen Daten werden mit Hilfe einer integrierten Ausgabevorrichtung auf dem Display des mobilen Datenverarbeitungsendgeräts 5 beispielsweise als Text angezeigt.

Die Informationen zu den auf den Abbildungen dargestellten Objekten können von verschiedenen externen Anbietern wie Verlagen V₁-V₅ über Softwareprogramme 10 über an sich bekannte Datenübertragungswege (Internet) eingespeist werden. Zusätzlich können die Verlage V₁-V₅ über Softwareprogramme 10 auf die zentrale Datenbank 7 zugreifen, um die generierten 2D-Codes 4 über einen Datenübertragungskanal 6 abzurufen. Außerdem können die Verlage zusätzlich zu den eigenen eingespeisten Informationen, bereits die von anderen Verlagen oder Anbietern hinterlegten Informationen abrufen und diese auch entsprechend als 2D-Codes generieren. Die eindeutig zugeordneten 2D-Codes 4 können dann von den Verlagen V₁-V₅ auf der jeweiligen Seite des Printmediums 1 mit den in den Abbildungen 3 dargestellten Objekten abgedruckt werden.

Zusätzlich kann zwischen mindestens einer zentralen Datenbank 7 und mindestens einem Anbieter A, der die in den Abbildungen 3 dargestellten Objekte führt, eine Verbindung über bekannte Datenübertragungswege bestehen. Dadurch werden die von einem Nutzer eines mobilen Datenverarbeitungsendgeräts 5 erfindungsgemäß abgerufenen Informationen direkt mit den Angaben der Anbieter A verglichen. Dementsprechend können dem Nutzer des erfindungsgemäßen Systems 100 detaillierte und aktuelle Informationen zu den Objekten seines Interesses zur Verfügung gestellt werden. Diese Informationen können beispielsweise den aktuellen Bestand des in den Abbildungen 3 dargestellten Objekts bei dem Anbieter A betreffen.

In einem weiteren Ausführungsbeispiel des erfindungsgemäßen Verfahrens, können die übertragenen Daten aus einem Printmedium 1 mit den empfangenen GPS-Daten des mobilen Datenübertragungsendgeräts 5 mindestens eines Nutzers abgeglichen und ausgewertet werden. Dadurch ist es für den Nutzer möglich, direkt Informationen darüber zu erhalten, ob möglicherweise ein Geschäft oder Händler in seiner direkten Nähe das gewünschte Produkt vertreibt. Zusätzlich kann der Nutzer Informationen zur Entfernung des Geschäftes, sowie dessen Öffnungszeiten erhalten und erfahren, ob das gewünschte Produkt möglicherweise auf Lager ist.

### Bezugszeichenliste

- 1: Printmedium
- 2: E-Paper
- 3: Abbildung
- 4: 2D-Code
- 5: mobiles Datenverarbeitungsendgerät
- 6: Datenübertragungskanal
- 7: zentrale Datenbank
- 8: zentrale Speichereinheit
- 9: optische Einrichtung
- 10: Softwareprogramm
- 100: System
- V₁-V₅: einzelne Verlage
- A: Anbieter

## Patentansprüche

1. Verfahren zur Übertragung von Daten in Abbildungen (3) dargestellter Objekte, insbesondere von Daten aus Printmedien (1) oder E-Paper (2), über ein System (100), das mindestens eine zentrale Speichereinheit (8), wenigstens einen bidirektionalen Datenübertragungskanal (6), mindestens eine zentrale Datenbank (7) und mindestens ein mobiles Datenverarbeitungsendgerät (5), welches einem Nutzer des Systems zugeordnet ist, umfasst, wobei die Daten zumindest zeitweilig über den mindestens einen bidirektionalen Datenübertragungskanal (6) von der mindestens einen zentralen Datenbank (7) an das mindestens eine mobile Datenverarbeitungsendgerät (5) übertragen werden, **dadurch gekennzeichnet,**
**dass** man den zu übertragenden Daten in der zentralen Datenbank (7) eine Informationsdatei zuordnet und netzwerkseitig ablegt, die Informationsdatei in Form eines zweidimensionalen Bitmusters (4) auf den Abbildungen (3) der dargestellten Objekte darstellt, wobei der Nutzer des Systems (100) mittels des mobilen Datenverarbeitungsendgeräts (5) das zweidimensionale Bitmuster (4) optoelektronisch erfasst, das mobile Datenverarbeitungsendgerät (5) die so erhaltene Informationsdatei über einen Übertragungskanal (6) an die zentrale Speichereinheit (8) übermittelt und die zentrale Speichereinheit (8) die der Informationsdatei zugeordneten Daten an das Datenverarbeitungsendgerät (5) überträgt.

2. Verfahren, gemäß Anspruch 1, **dadurch gekennzeichnet, dass** man die in der mindestens einen zentralen Datenbank (7) hinterlegten Informationsdateien zur eindeutigen Identifizierung der in den Abbildungen (3) dargestellten Objekte verwendet.

3. Verfahren, gemäß Anspruch 1 oder 2, **dadurch gekennzeichnet, dass** das zweidimensionale Bitmuster (4) ein 2D-Code (4) ist, wobei dieser Barcodes, QR-Codes, Strichcodes oder Balkencodes umfasst.

4. Verfahren, gemäß Anspruch 3, **dadurch gekennzeichnet, dass** man das mindestens eine mobile Datenverarbeitungsendgerät (5), nach Aktivierung durch den Nutzer, zur automatischen Ablesung zweidimensionaler Bitmuster aus Printmedien (1) oder E-Paper (2) verwendet.

5. Verfahren, gemäß mindestens einem der Ansprüche 1 bis 4, **dadurch gekennzeichnet, dass** man die der Informationsdatei zugeordneten Daten zumindest teilweise über den mindestens einen bidirektionalen Datenübertragungskanal (6) verschlüsselt auf das mindestens eine mobile Datenverarbeitungsendgerät (5) überträgt.

6. Verfahren, gemäß Anspruch 5, **dadurch gekennzeichnet**, wobei man die zumindest teilweise verschlüsselten Daten nach Übertragung auf das mobile Datenverarbeitungsendgerät (5) zumindest teilweise auf dem mindestens einen mobilen Datenverarbeitungsendgerät (5) entschlüsselt.

7. Verfahren, gemäß mindestens einem der Ansprüche 1 bis 6, **dadurch gekennzeichnet, dass** man gegebenenfalls mit Hilfe einer unabhängigen Ausgabevorrichtung die übermittelten Daten als Text erzeugt und auf dem mobilen Datenverarbeitungsendgerät (5) darstellt.

8. Verfahren, gemäß mindestens einem der Ansprüche 1 bis 7, **dadurch gekennzeichnet, dass** man dem Nutzer eines mobilen Datenverarbeitungsendgeräts (5) Angaben über die Position des mobilen Datenverarbeitungsendgeräts (5) und/oder den Zeitpunkt der Übertragung von Daten darstellt.

9. Verfahren, gemäß Anspruch 8, **dadurch gekennzeichnet, dass** man die Position eines Nutzers des mindestens einen mobilen Datenverarbeitungsendgeräts (5) mittels GPS ermittelt.

10. Verfahren, gemäß Anspruch 8, **dadurch gekennzeichnet, dass** man die ermittelten Positionsdaten und/oder den Zeitpunkt der Übertragung von Daten mit den zu einer Informationsdatei zugeordneten übertragenen Daten vergleicht, verarbeitet und/oder analysiert.
